(19) **Europäisches Patentamt**
**European Patent Office**
**Office européen des brevets**

(11) **EP 2 960 675 A1**

(12) **EUROPEAN PATENT APPLICATION**
published in accordance with Art. 153(4) EPC

(43) Date of publication:
**30.12.2015 Bulletin 2015/53**

(51) Int Cl.:
**G01S 13/46** (2006.01)

(21) Application number: **13875429.6**

(22) Date of filing: **22.08.2013**

(86) International application number:
**PCT/JP2013/072423**

(87) International publication number:
**WO 2014/128995 (28.08.2014 Gazette 2014/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.02.2013 JP 2013034564**

(71) Applicant: **Mitsubishi Electric Corporation Tokyo 100-8310 (JP)**

(72) Inventors:
• **OSHIMA, Tadashi**
  **Tokyo 100-8310 (JP)**

• **HARA, Teruyuki**
  **Tokyo 100-8310 (JP)**
• **TAKAHASHI, Ryuhei**
  **Tokyo 100-8310 (JP)**
• **OKAMURA, Atsushi**
  **Tokyo 100-8310 (JP)**

(74) Representative: **Pfenning, Meinig & Partner GbR Patent- und Rechtsanwälte Theresienhöhe 11a 80339 München (DE)**

(54) **PASSIVE RADAR DEVICE**

(57)      A passive radar device includes a receiving antenna 101 that receives a reflected wave transmitted from a transmission source 201 and reflected by a target 202, a receiving antenna 102 that receives a direct wave transmitted from the transmission source 201, a band divider 103 that divides the received signal of the reflected wave on a frequency band by frequency band basis, a band divider 104 that divides the received signal of the direct wave on a frequency band by frequency band basis, a receiver 105 that receives a received signal of each frequency band and A/D converts the received signal, a receiver 106 that receives a received signal of each frequency band and A/D converts the received signal, a cross correlation processor 107 that performs a cross correlation between the received signal of the reflected wave and the received signal of the direct wave on a frequency band by frequency band basis, a band synthesizer 108 that performs a band synthesis on a cross correlation result of each frequency band, and a peak detector 109 that detects the target 202 on the basis of a band synthesis result.

FIG.1

**Description**

FIELD OF THE INVENTION

The present invention relates to a passive radar device that implements detection and tracking of a target, such as an airplane or a ship, by using, as a radiation source, an existing radio source without radiating a radio wave for itself, and that provides an improvement in its detection tracking performance by performing a coherent synthesis on a plurality of frequency bands.

BACKGROUND OF THE INVENTION

A passive radar device implements detection and tracking of a target, such as an airplane or a ship, by using, as a transmission source, an existing radio source used for communications, broadcast, etc. without radiating a radio wave for itself, and receiving and processing a radio wave radiated from the radio source and a radio wave reflected by the target. A part, which directly reaches a receiver, of a radio wave radiated from the transmission source is called a direct wave, and a radio wave reflected by the target is called a reflected wave. The passive radar device then calculates a cross correlation between the direct wave and the reflected wave, and performs detection and tracking of the target by detecting a peak of the cross correlation. An antenna, the receiver, etc. that receive the direct wave are called a reference system, and an antenna, a receiver, etc. that receive the reflected wave are called a survey system.

The existing radio source that serves as a radiation source in the passive radar has a plurality of frequency bands in many cases, and an improvement in the detection tracking performance can be provided by performing a coherent synthesis on the frequency bands. The following patent reference 1 is provided as an example of a passive radar using a radio wave having a plurality of frequency bands.

According to this patent reference 1, a signal having a plurality of frequency bands is received by a wide band receiver, the Doppler frequency of a received signal of a reference system is compensated for, and a correlation process with a received signal of a survey system is performed to calculate a two-dimensional cross correlation of a delay/Doppler frequency. Then, a target is detected by detecting a peak of the correlation.

RELATED ART DOCUMENT

Patent reference

Patent reference 1: Japanese Unexamined Patent Application Publication (Translation of PCT Application) No. 2005-517190 Nonpatent reference

Nonpatent reference 1: K.S. Kulpa, J. Misiurewicz, "Stretch Processing for Long Integration Time Passive CovertRadar," CIE'06. International Conf., Radar, Oct. 2006.

SUMMARY OF THE INVENTION

PROBLEMS TO BE SOLVED BY THE INVENTION

However, the configuration described in above-mentioned patent reference 1 has the two following problems.

The first problem is that a wide band receiver is needed, and costs high as compared with a narrow band receiver. Further, because the number of sample data after A/D conversion also increases, the amount of computations of the cross correlation increases.

The second problem is that because the Doppler frequency differs for each frequency band, when the Doppler frequencies of the signal having the plurality of frequency bands are simultaneously compensated for by using one Doppler frequency, the compensation cannot be performed precisely and a loss in the cross correlation process occurs.

Hereafter, the second problem will be explained.

There is a relation, given by the following equation (1), between a bistatic Doppler speed V of the target (the sum of a target-to-transmitter direction component and a target-to-receiver direction component of a target speed) and a transmission carrier frequency.

$$f_d(n) = \frac{V}{c} f_c(n) \qquad (1)$$

In this equation, fd(n) denotes the Doppler frequency in the n-th frequency band, fc(n) denotes the carrier frequency of a signal in the n-th frequency band, and c denotes the speed of light.

In the passive radar, in order to extend a detecting distance, a long-time cross correlation process is used generally. When a cross correlation time is expressed by T, a frequency resolution $\Delta$fd after the cross correlation process can be expressed by the following equation (2).

$$\Delta f_d = \frac{1}{T} \qquad (\,2\,)$$

For example, considering a case in which a CS broadcast signal (clockwise polarized wave) is used as the transmission source, $\Delta$fd=1Hz when T=1 second. By assuming the bistatic Doppler speed V=300 m/s, and taking into consideration fc(n)=12.291GHz+(n-1)$\times$40MHz, it can be seen that a Doppler frequency difference occurring between the frequency bands of the CS broadcast signal is (V/c) $\times$40MHz=40Hz, and easily exceeds a Doppler frequency resolution of 1 Hz. More specifically, when the signal in each frequency band is simultaneously compensated for by using one Doppler frequency, the compensation is not implemented precisely and a cross correlation loss occurs.

The present invention is made in order to solve the above-mentioned problems, and it is therefore an object of the present invention to provide a passive radar device that can prevent an integration loss which is caused by a difference in the Doppler frequency between a plurality of frequency bands.

MEANS FOR SOLVING THE PROBLEM

In accordance with the present invention, there is provided a passive radar device including: a survey system receiving antenna that receives a reflected wave transmitted from a radio source and reflected by a target; a reference system receiving antenna that receives a direct wave transmitted from the radio source; a survey system band divider that divides a received signal of the reflected wave received by the survey system receiving antenna on a frequency band by frequency band basis; a reference system band divider that divides a received signal of the direct wave received by the reference system receiving antenna on a frequency band by frequency band basis; a survey system receiver that receives a received signal of the reflected wave of each frequency band provided through the division by the survey system band divider, and performs A/D conversion on the received signal; a reference system receiver that receives a received signal of the direct wave of each frequency band provided through the division by the reference system band divider, and performs A/D conversion on the received signal; a cross correlation processor that performs a cross correlation on a frequency band by frequency band basis between the received signal of the reflected wave on which the A/D conversion is performed by the survey system receiver, and the received signal of the direct wave on which the A/D conversion is performed by the reference system receiver; a band synthesizer that performs a band synthesis on a cross correlation result of each frequency band which is provided by the cross correlation processor; and a target detector that detects the target on the basis of a band synthesis result provided by the band synthesizer.

Further, in accordance with the present invention, there is provided a passive radar device including: a survey system receiving antenna that receives a reflected wave transmitted from a radio source and reflected by a target; a reference system receiving antenna that receives a direct wave transmitted from the radio source; a survey system wide band receiver that receives a received signal of the reflected wave, which is received by the survey system receiving antenna, in a wide band, performs A/D conversion on the received signal, and divides the received signal on a frequency band by frequency band basis; a reference system wide band receiver that receives a received signal of the direct wave, which is received by the reference system receiving antenna, in a wide band, performs A/D conversion on the received signal, and divides the received signal on a frequency band by frequency band basis; a cross correlation processor that performs a cross correlation on a frequency band by frequency band basis between a received signal of the reflected wave provided through the division by the survey system wide band receiver, and a received signal of the direct wave provided through the division by the reference system wide band receiver; a band synthesizer that performs a band synthesis on a cross correlation result of each frequency band which is provided by the cross correlation processor; and a target detector that detects the target on the basis of a band synthesis result provided by the band synthesizer.

ADVANTAGES OF THE INVENTION

Because the passive radar device in accordance with the present invention is configured as above, the passive radar device can prevent an integration loss which is caused by a difference in the Doppler frequency between the plurality of frequency bands.

BRIEF DESCRIPTION OF THE FIGURES

[Fig. 1] Fig. 1 is a diagram showing the configuration of a passive radar device in accordance with Embodiment 1 of the present invention;

[Fig. 2] Fig. 2 is a diagram showing a process performed by a band divider in accordance with Embodiment 1 of the present invention;

[Fig. 3] Fig. 3 is a diagram showing the configuration of a cross correlation processor in accordance with Embodiment 1 of the present invention;

[Fig. 4] Fig. 4 is a flow chart showing the operation of the passive radar device in accordance with Embodiment 1 of the present invention;

[Fig. 5] Fig. 5 is a diagram showing the configuration of a cross correlation processor in accordance with Embodiment 2 of the present invention;

[Fig. 6] Fig. 6 is a diagram showing a process performed by the cross correlation processor in accordance with Embodiment 2 of the present invention;

[Fig. 7] Fig. 7 is a diagram showing the configuration of a passive radar device in accordance with Embodiment 3 of the present invention;

[Fig. 8] Fig. 8 is a diagram showing the configuration of a passive radar device in accordance with Embodiment 4 of the present invention;

[Fig. 9] Fig. 9 is a diagram showing the configuration of a passive radar device in accordance with Embodiment 6 of the present invention; and

[Fig. 10] Fig. 10 is a diagram showing the configuration of a passive radar device in accordance with Embodiment 7 of the present invention.

EMBODIMENTS OF THE INVENTION

Hereafter, the preferred embodiments of the present invention will be explained in detail with reference to the drawings.

Embodiment 1.

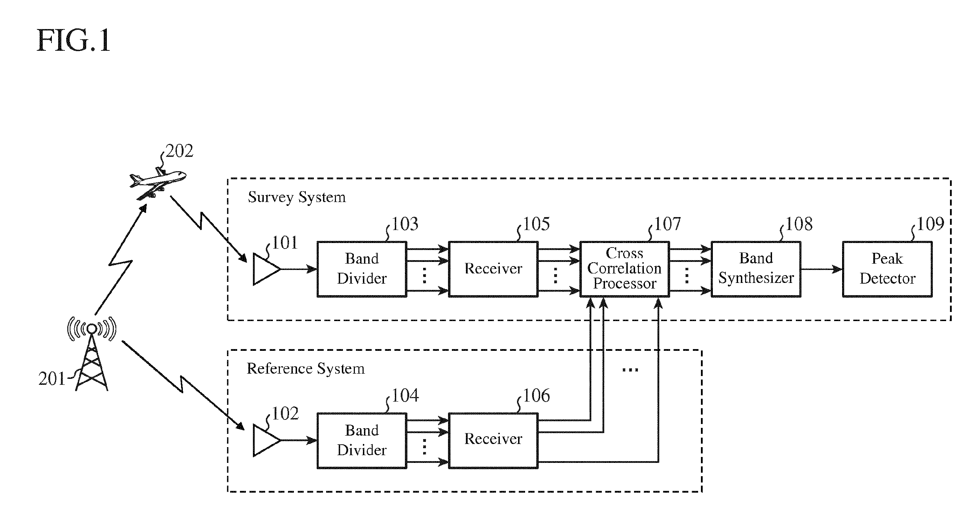

Fig. 1 is a diagram showing the configuration of a passive radar device in accordance with Embodiment 1 of the present invention.

The passive radar device is configured with receiving antennas 101 and 102, band dividers 103 and 104, receivers 105 and 106, a cross correlation processor 107, a band synthesizer 108, and a peak detector 109, as shown in Fig. 1. In this passive radar device, the receiving antenna 101, the band divider 103, the receiver 105, the cross correlation processor 107, the band synthesizer 108, and the peak detector 109 construct a survey system, and the receiving antenna 102, the band divider 104, and the receiver 106 construct a reference system.

The receiving antenna (survey system receiving antenna) 101 receives a radio wave (reflected wave) which is transmitted from a transmission source 201 which is an existing radio source, and which is reflected by a target 202 which is desired to be detected, such as an airplane or a ship.

The receiving antenna (reference system receiving antenna) 102 receives a radio wave (direct wave) transmitted from the transmission source 201.

Because the direct wave causes interference in the survey system that detects the target 202, it is desirable to give consideration to the prevention of the direct wave from being mixed, as much as one can. Further, because a cross correlation with the received signal of the survey system is performed on the direct wave received by the reference system by the cross correlation processor 107, it is desirable that a multiple scattering wave generated in a multipath environment or the like is not included in the direct wave. Therefore, the receiving antenna 102 is placed at a location where an unobstructed view of the transmission source 201 can be gotten, as much as one can.

The band divider (survey system band divider) 103 divides the received signal (RF signal) of the reflected wave received by the receiving antenna 101 on a frequency band by frequency band basis.

The band divider (reference system band divider) 104 divides the received signal (RF signal) of the direct wave received by the receiving antenna 102 on a frequency band by frequency band basis.

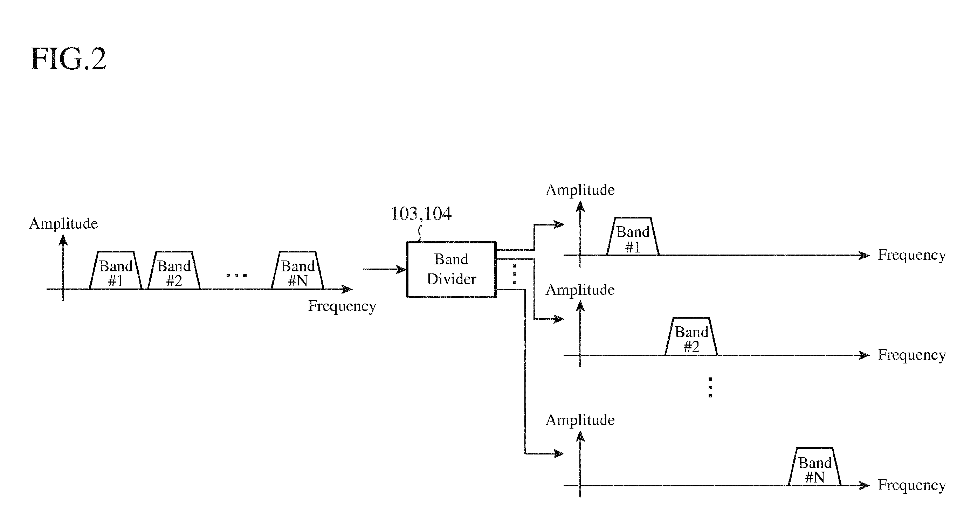

As the band dividers 103 and 104, parts which are called splitters, separators, antenna shared devices, etc. are generally used, and the band dividers divide the received signals on a predetermined frequency band by frequency band basis, in analog stages, as shown in Fig. 2. Because a splitter splits a signal according to frequency, the loss in the SNR (Signal to Noise Ratio) is small. However, because the SNR loss at the time of division may become large depending on the frequency bandwidth, a configuration can be provided in which each received signal is divided into parts associated with a plurality of frequency bandwidths.

Further, a configuration can be provided in which each of the band dividers 103 and 104 includes a local signal transmission source, a signal in which the frequency from this local signal transmission source is varied in a time series is mixed with the received signal to change the band to be extracted, and this received signal is divided on a frequency band by frequency band basis.

The receiver (survey system receiver) 105 receives a received signal of the reflected wave of each frequency band provided through the division by the band divider 103, and performs A/D conversion on the received signal.

The receiver (reference system receiver) 106 receives a received signal of the direct wave of each frequency band provided through the division by the band divider 104, and performs A/D conversion on the received signal.

The receivers 105 and 106 do not need to be wide band receivers and can be narrow band receivers (low speed A/D converters).

The cross correlation processor 107 performs a cross correlation for each frequency band between the received signal of the reflected wave on which the A/D conversion is performed by the receiver 105, and the received signal of the direct wave on which the A/D conversion is performed by the receiver 106. The configuration of this cross correlation processor 107 will be described below.

The band synthesizer 108 performs a band synthesis on a cross correlation result of each frequency band which is provided by the cross correlation processor 107.

The peak detector (target detector) 109 detects the target 202 on the basis of a band synthesis result provided by the band synthesizer 108.

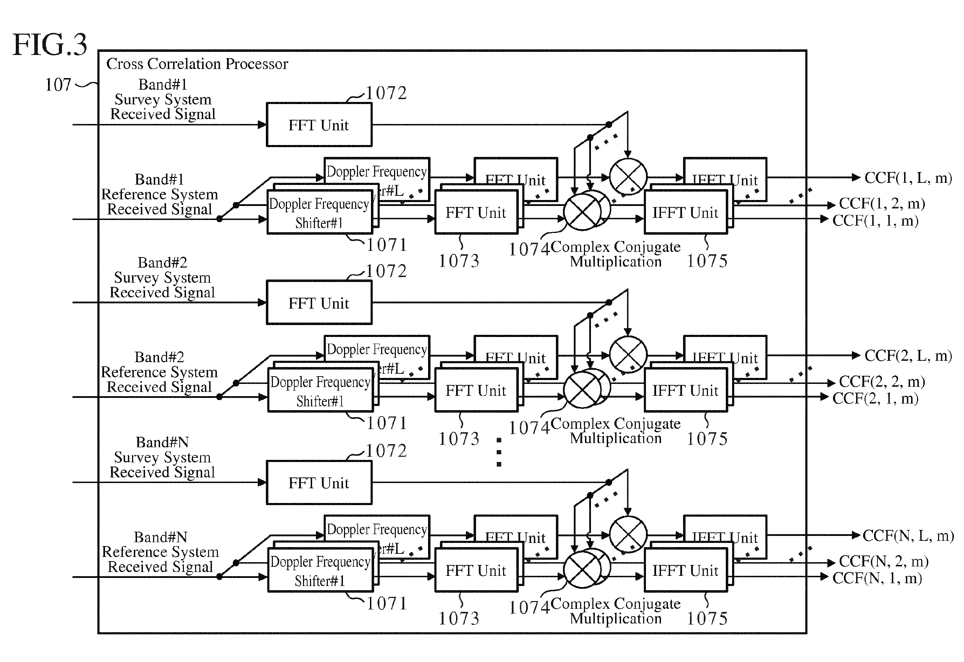

Next, the configuration of the cross correlation processor 107 will be explained with reference to Fig. 3.

The cross correlation processor 107 is configured with a Doppler frequency shifter 1071, FFT units 1072 and 1073, a complex conjugate multiplier 1074, and an IFFT unit 1075, for each frequency band, as shown in Fig. 3.

The Doppler frequency shifter 1071 performs a frequency shift on the received signal of the direct wave of each frequency band from the receiver 106 by a Doppler frequency which is calculated from both an expected bistatic Doppler speed of the target and a carrier frequency of each frequency band.

The FFT unit 1072 performs a fast Fourier transform (FFT) on the received signal of the reflected wave of each frequency band from the receiver 105.

The FFT unit 1073 performs a fast Fourier transform (FFT) on the received signal of the direct wave of each frequency band on which the frequency shift is performed by the Doppler frequency shifter 1071.

The complex conjugate multiplier 1074 takes the complex conjugate of the received signal of the direct wave of each frequency band on which the fast Fourier transform is performed by the FFT unit 1073, and multiplies the complex conjugate by the received signal of the reflected wave of each frequency band on which the fast Fourier transform is performed by the FFT unit 1073.

The IFFT unit 1075 performs an inverse fast Fourier transform (IFFT: Inverse FFT) on an output signal which is a complex conjugate multiplication result provided by the complex conjugate multiplier 1074.

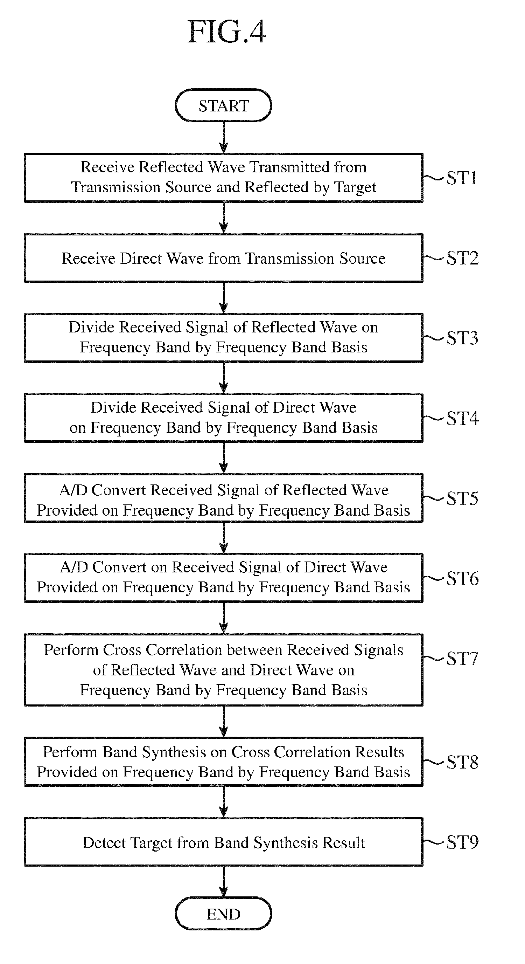

Next, the operation of the passive radar device configured as above will be explained with reference to Fig. 4.

In the operation of the passive radar device, as shown in Fig. 4, the receiving antenna 101 receives a reflected wave which is transmitted from the transmission source 201 and is reflected by the target 202 first (step ST1). Further, the receiving antenna 102 receives a direct wave transmitted from the transmission source 201 (step ST2).

Then, the band divider 103 divides the received signal of the reflected wave received by the receiving antenna 101 on a frequency band by frequency band basis (step ST3). Further, the band divider 104 divides the received signal of the direct wave received by the receiving antenna 102 on a frequency band by frequency band basis (step ST4).

Then, the receiver 105 receives a received signal of the reflected wave of each frequency band provided through the division by the band divider 103, and performs A/D conversion on the received signal (step ST5). Further, the receiver 106 receives a received signal of the direct wave of each frequency band provided through the division by the band divider 104, and performs A/D conversion on the received signal (step ST6).

When the received signal (#1 to #N) of each frequency band is inputted, each of the receivers 105 and 106 performs amplification of the received signal using an LNA (Low Noise Amplifier), mixing with a local signal using a mixer, and so on, and then converts the received signal into a signal in an IF (intermediate frequency) band, and, after that, converts this signal into a digital signal by performing A/D conversion on the signal.

In a case in which the above-mentioned mixer is a quadrature mixer, the signal after the A/D conversion can be handled as a complex signal because the signal after the A/D conversion has an I signal and a Q signal. In this case, the signal after the A/D conversion can be converted into a baseband signal by multiplying the signal after the A/D conversion by $\exp(-j \cdot 2n \cdot fIF \cdot t)$, where fIF is an IF center frequency. In a case in which the above-mentioned mixer is not a quadrature mixer, because the signal after the A/D conversion has only an I signal, the signal after the A/D conversion is converted into a complex signal through a Hilbert transform or the like, and the complex signal is converted into a baseband signal by multiplying the complex signal by $\exp(-j \cdot 2n \cdot fIE \cdot t)$.

The cross correlation processor 107 then performs a cross correlation for each frequency band between the received signal of the reflected wave on which the A/D conversion is performed by the receiver 105, and the received signal of the direct wave on which the A/D conversion is performed by the receiver 106 (step ST7).

Hereafter, the received signals (baseband signals) in a frequency band #n of the survey system and the reference system are expressed by $s_{sur}$ (n, t) and $s_{ref}$ (n, t), respectively. Further, assuming that the transmission source 201 is standing still, the baseband signal of the survey system is frequency-shifted by the bistatic Doppler frequency fd(n) which is shown by equation (1) and which occurs with an movement of the target. This fd (n) is usually unknown. Therefore, in the Doppler frequency shifter 1071, a bistatic Doppler speed V(l) corresponding to a range of expected bistatic Doppler frequencies is prepared, and the baseband signal of the reference system is frequency-shifted. The shifted signal $\tilde{s}_{ref}$(n, l, t) is given by the following equation (3).

$$\widetilde{s}_{ref}\left(n,l,t\right)= s_{ref}\left(n,t\right)\exp\left( j2\pi \frac{V(l)}{c}f_c\left(n\right)t\right) \qquad (3)$$

The bistatic Doppler speed V(l) is set up according to, e.g., V(l)=V(1)+ΔV(l-1). In this equation, V(1) denotes an initial value of the bistatic Doppler speed which is desired to be observed and ΔV denotes a bistatic Doppler interval, and it is desirable that ΔV is equal to or less than 1/T in order to reduce the loss in the cross correlation process.

Further, a function CCF(n, l, τ) of a cross correlation between $\tilde{s}_{ref}$(n, l, t) and $s_{sur}$(n, t) is provided as shown in the following equation (4).

$$CCF\left(n,l,\tau\right)= \int_0^T s_{sur}\left(n,t\right)\widetilde{s}_{ref}^{\,*}\left(n,t-\tau\right)dt \qquad (4)$$

When the above-mentioned cross correlation function is actually calculated, the amount of computations increases with increase in the cross correlation time T. Therefore, in the FFT units 1072 to 1073, the complex conjugate multiplier 1074, and the IFFT unit 1075, as a cyclic correlation arithmetic operation using a fast Fourier transform (FFT) and an inverse fast Fourier transform (IFFT), the cross correlation function is calculated by using the following equation (5).

$$CCF\left(n,l,m\right)= IFFT\left[FFT\left[s_{sur}\left(n,t\right)\right]\cdot\left\{FFT\left[s_{sur}\left(n,t\right)\right]\right\}^*\right] \qquad (5)$$

In this equation, m (m=1, ..., M) is a delay bin after the cross correlation process. Further, a delay time τ can be calculated as τ=(m-1)·Δt by using a sampling period Δt.

The band synthesizer 108 then synthesizes the cross correlation result CCF(n, l, m) of each frequency band, which is provided by the cross correlation processor 107, between the bands, as shown in the following equation (6), to improve the SNR (step ST8).

$$CCCF\left(k,l,m\right)= \sum_{n=1}^{N} CCF\left(n,l,m\right)\exp\left(j2\pi f_c\left(n\right)\left(k-1\right)\Delta t\right) \qquad (6)$$

The above equation (6) is none other than an inverse Fourier transform in a band direction. Therefore, when the interval between frequency bands is a constant value of Δfb (i.e., when fc(n)=f1+(n-1)Δfb (f1 is the carrier frequency of the first frequency band)), the Fourier transform shown by the above equation (6) can be replaced by an inverse fast Fourier transform, as shown in the following equation (7).

$$CCCF\left(k,l,m\right)= \sum_{n=1}^{N} CCF\left(n,l,m\right)\exp\left( j2\pi \frac{(n-1)(k-1)}{N}\right) \qquad (7)$$

Although a target delay time τ can be calculated from τ = (m-1)·Δt, the target delay time cannot be estimated to be none other than an interval of Δt. Therefore, in the band synthesizer 108, by synthesizing N frequency bands, the target delay time can be estimated to be an interval of 1/(N·Δfb), and a delay time resolution can also be improved with an improvement in the SNR. However, a delay time range which can be observed after the interband synthesizing process is limited to 1/Δfb.

The peak detector 109 then detects the target 202 by calculating the square of the absolute value of CCCF(k, l, m) which is the band synthesis result provided by the band synthesizer 108, and then detecting a peak of the square (step ST9). As a method of detecting a peak, there are a method of detecting a peak as the target when the above-mentioned square of the absolute value exceeds a predetermined value which is set in advance, and a CA-CFAR (Cell Averaging-Constant False Alarm Rate) method of setting, as a threshold, a value which is acquired by multiplying, by a coefficient, an average of the above-mentioned squares of the absolute values in a region in the vicinity of a cell on which attention is focused, and detecting a peak as the target when the cell on which attention is focused exceeds the threshold.

As mentioned above, because the passive radar device in accordance with this Embodiment 1 is configured in such a way as to divide each of the received signals into signals in frequency bands and A/D convert these signals, and, after that, perform a cross correlation on a frequency band by frequency band basis, and perform a band synthesis, the passive radar device can eliminate the need for providing a wide band receiver and implement a cross correlation with a small loss by using a low speed A/D converter, and can therefore prevent an integration loss which is caused by a difference in the Doppler frequency between the plurality of frequency bands.

Embodiment 2.

Although the case of performing a fast Fourier transform on a signal having a cross correlation time of T, and performing a cross correlation is shown in Embodiment 1, the amount of computations increases with increase in the cross correlation time of T in this case. Therefore, in Embodiment 2, a configuration will be shown in which each received signal is divided on a block by block basis and a cross correlation is performed on each block, and, after that, a fast Fourier transform is performed between blocks, thereby solving the above-mentioned problem.

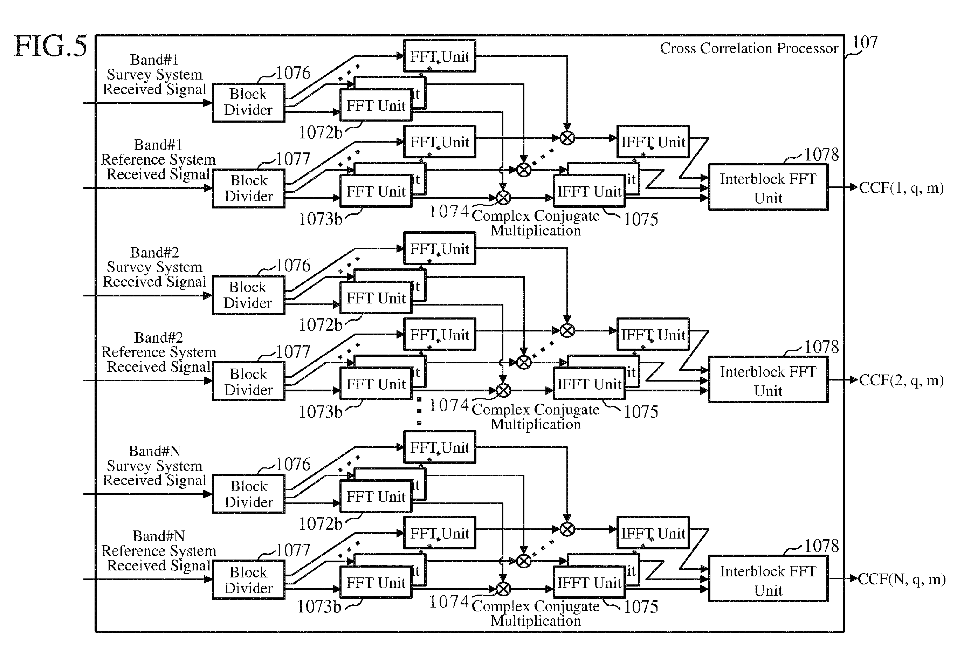

Fig. 5 is a diagram showing the configuration of a cross correlation processor 107 in accordance with Embodiment 2 of the present invention. The cross correlation processor 107 in accordance with Embodiment 2 shown in Fig. 5 is the one in which the Doppler frequency shifter 1071 is eliminated from the cross correlation processor 107 in accordance with Embodiment 1 shown in Fig. 2, block dividers 1076 and 1077 and an interblock FFT unit 1078 are added, and the FFT units 1072 and 1073 are changed to FFT units 1072b and 1073b. The other components are the same and are designated by the same reference numerals, and the explanation of the components will be omitted hereafter.

The block divider 1076 divides a received signal of a reflected wave of each frequency band from the receiver 105 on a block by block basis.

The block divider 1077 divides a received signal of a direct wave of each frequency band from the receiver 106 on a block by block basis.

The FFT unit 1072b performs a fast Fourier transform (FFT) on a received signal of the reflected wave of each frequency band and of each block which is provided through the division by the block divider 1076.

The FFT unit 1073b performs a fast Fourier transform (FFT) on a received signal of the direct wave of each frequency band and of each block which is provided through the division by the block divider 1077.

The complex conjugate multiplier 1074 takes the complex conjugate of the received signal of the direct wave of each frequency band and of each block on which the fast Fourier transform is performed by the FFT unit 1073b, and multiplies the complex conjugate by the received signal of the reflected wave of each frequency band and of each block on which the fast Fourier transform is performed by the FFT unit 1072b.

Further, the interblock FFT unit 1078 performs a fast Fourier transform (FFT) on an inverse fast Fourier transform result provided by the IFFT unit 1075 in a block direction.

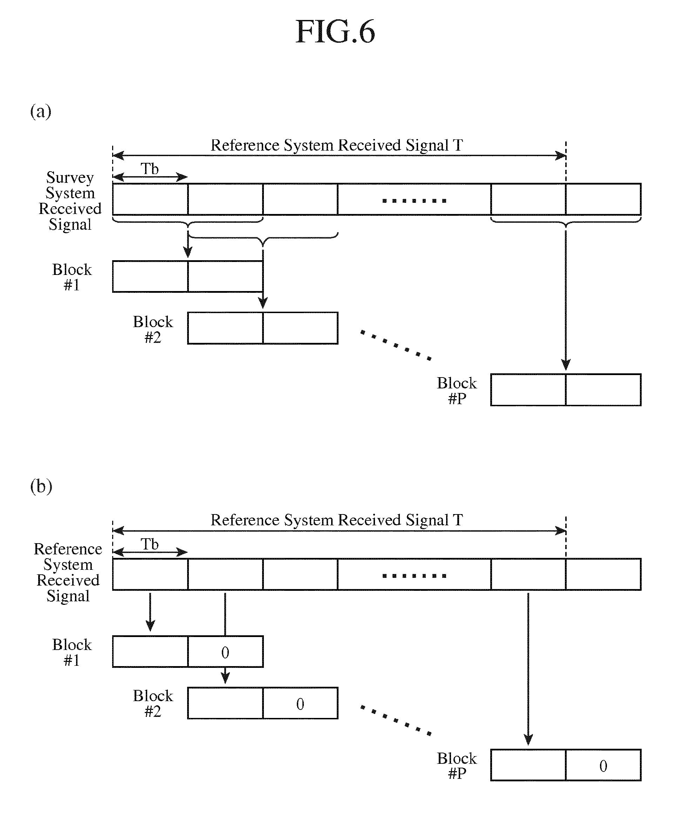

Although a correlation operation using a fast Fourier transform is a cyclic cross correlation, a transmission signal in the passive radar device is generally not a repetitive signal. Therefore, in order to perform a sliding correlation in a correlation operation using a fast Fourier transform, the received signals of the survey system and the reference system are divided, as shown in Fig. 6,

More specifically, as shown in Fig. 6 (a), after dividing the received signal on an interval Tb by Tb basis, the block divider 1076 generates a block having an interval of 2Tb by adding the received signal of the next block to the received signal of each block provided through the above-mentioned division. On the other hand, as shown in Fig. 6(b), after dividing the received signal on an interval Tb by Tb basis, the block divider 1077 generates a block having an interval of 2Tb by adding a zero signal having an interval of Tb to the received signal of each block provided through the above-mentioned division. However, in order to reduce the amount of computations of the correlation operation, both the survey system and the reference system can be configured in such a way as to, when the target delay time $\tau$ is sufficiently shorter than the interval of Tb, perform a correlation operation on the received signal of each interval of Tb provided through the division.

Further, the fast Fourier transform between blocks can be configured in such a way that the Fourier transform is performed with respect to the bistatic Doppler speed V(l) of the target, like in the case of equation (3) shown in Embodiment 1.

The band synthesizer 108 synthesizes CCF(n, q, m) which is a result provided by the cross correlation processor 107 in a direction of a frequency band n, like in the case of equation (6) shown in Embodiment 1. In this case, although q is an index showing a Doppler frequency (=(q-1)/Tb/P), the Doppler frequency of the target differs between the frequency bands, as shown in equation (1). Therefore, after performing conversion into a target speed (Doppler speed) according to equation (1), the band synthesizer 108 performs a synthesis between the frequency bands by performing an inverse fast Fourier transform on CCF (n, q, m) in which q shows that the target speeds match or are close to each other.

Further, in a case of replacing the fast Fourier transform between blocks with a configuration in which a Fourier transform is performed with respect to the bistatic Doppler speed V(l) of the target, the above-mentioned dealing with q is unnecessary, and what is necessary is just to perform an inverse fast Fourier transform on CCF(n, l, m) having the same 1 in the direction of n.

As mentioned above, because the cross correlation processor 107 in accordance with this Embodiment 2 is configured in such a way as to divide each of both the received signals of the survey system and the reference system into blocks and perform a cross correlation between blocks, and, after that, perform a fast Fourier transform between blocks, increase in the amount of computations can be avoided even if the cross correlation time of T becomes long, in addition to the advantages provided by Embodiment 1.

In Embodiment 2, the configuration in which when the conversion into a bistatic Doppler speed V using the Doppler frequency index q is performed after the cross correlation function CCF(n, q, m) is calculated, cross correlation functions in which the above-mentioned bistatic Doppler speeds V match or are close to each other are synthesized is described. On the other hand, according to equation (1), the ratio in the Doppler frequency between the frequency bands is determined only by the ratio between the carrier frequencies, not depending on the bistatic Doppler speed V. Therefore, as shown by CCF (n, q*fc (n) /f1 (n),m), cross correlation functions in each of which the ratio between the carrier frequencies of the frequency bands matches or is close to the ratio between the Doppler frequencies of the frequency bands can be synthesized.

Embodiment 3.

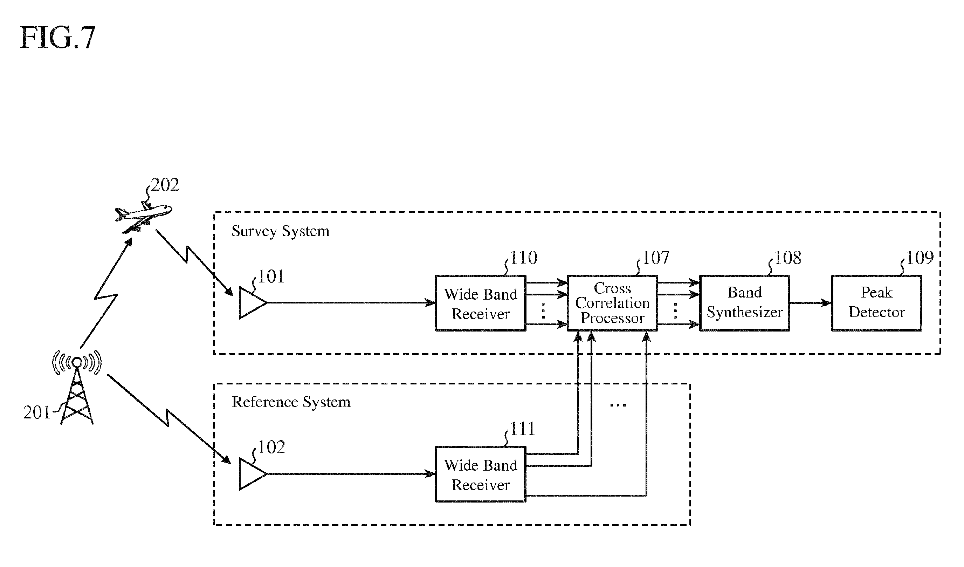

Fig. 7 is a diagram showing the configuration of a passive radar device in accordance with Embodiment 3 of the present invention. The passive radar device in accordance with Embodiment 3 shown in Fig. 7 is the one in which the band dividers 103 and 104 and the receivers 105 and 106 are eliminated from the passive radar device in accordance with Embodiment 1 shown in Fig. 1 and wide band receivers 110 and 111 are added. The other components are the same and are designated by the same reference numerals, and the explanation of the components will be omitted hereafter.

The wide band receiver (survey system wide band receiver) 110 receives a received signal (RF signal) of a reflected wave received by the receiving antenna 101 in a wide band, performs A/D conversion on the received signal, and divides it on a frequency band by frequency band basis.

The wide band receiver (reference system wide band receiver) 111 receives a received signal (RF signal) of a direct wave received by the receiving antenna 102 in a wide band, performs A/D conversion on the received signal, and divides it on a frequency band by frequency band basis.

In the configuration shown in Fig. 7, after A/D converting signals in a plurality of frequency bands by using the wide band receivers 110 and 111, the passive radar device divides each of them into signals in each of the bands by performing digital processing. However, in this case, as the wide band receivers 110 and 111, wide band receivers and wide band A/D converters are needed.

As mentioned above, in accordance with this Embodiment 3, even in the case in which the passive radar device is configured in such a way as to use the wide band receivers 110 and 111, instead of the band dividers 103 and 104 and the receivers 105 and 106, an integration loss which is caused by a difference in the Doppler frequency between the plurality of frequency bands can be prevented.

Embodiment 4.

Embodiment 4 shows a method of synthesizing signals in a plurality of frequency bands without a loss by estimating variations in the amplitudes and phases of transmission signals in the plurality of frequency bands, and variations in the amplitudes and phases due to the frequency characteristics of receivers in a real time by using a simple configuration.

First, by taking a CS/BS broadcast wave as an example, variations in the amplitudes and phases of transmission signals in a plurality of frequency bands, and variations in the amplitudes and phases due to the frequency characteristics of the receivers will be explained.

A transmission signal in a frequency band can be expressed as follows.

$$s_n(t)\exp(j2\pi f_{c,n}t)\exp(j\phi_n) \qquad (8)$$

In this equation, $s_n(t)$ denotes a modulated sequence (broadcast/communications data, or the like) of a frequency channel #n, $f_{c,n}$ denotes a center frequency (carrier frequency) of the frequency channel #n, and $\phi_n$ denotes an initial phase of a signal of the frequency channel #n. Further, a receiving antenna/receiver that receives a direct wave from a satellite is referred to as a reference system, and a receiving antenna/receiver that receives a target scattered wave is referred to as a survey system. It is premised that the reference system and the survey system are operating in synchronization with each other.

Next, a direct wave of the frequency channel #n received by the reference system can be expressed as follows.

$$s_{ref,n}(t) = \alpha_n s_n(t - \tau_D)\exp(j2\pi f_{c,n}(t - \tau_D))\exp(j\phi_n) \qquad (9)$$

In this equation, $\alpha_n$ denotes a complex amplitude at the time of reception of the direct wave of the frequency channel #n, and $\tau_D$ denotes a propagation delay time from the satellite to the reference system.

Next, by multiplying the received signal given by equation (9) by a local signal $\exp(j2\pi f_{c,n}t)$, the received signal is converted into a baseband signal.

$$\tilde{s}_{ref,n}(t) = \alpha_n s_n(t - \tau_D)\exp(-j2\pi f_{c,n}\tau_D)\exp(j\tilde{\phi}_n) \qquad (10)$$

$\Phi\tilde{}_n$ denotes a phase of the frequency channel #n including an initial phase of the local signal.

Next, a received signal of the survey system will be examined.

In this case, when a complex amplitude at the time of reception of the target scattered wave of the frequency channel #n is expressed by $\beta_n$, a propagation delay time from the satellite, via the target, to the survey system is expressed by $\tau_B$, a bistatic speed of the target is expressed by $v_B$, and the speed of light is expressed by c, the received signal of the survey system can be expressed as follows.

$$s_{sur,n}(t) = \beta_n s_n(t - \tau_B)\exp\left(j2\pi f_{c,n}\left(t - \tau_B + \frac{v_B}{c}t\right)\right)\exp(j\phi_n)$$
$$= \beta_n s_n(t - \tau_B)\exp(j2\pi f_{c,n}(t - \tau_B))\exp(j2\pi f_{b,n}t)\exp(j\phi_n) \qquad (11)$$

In this equation, $f_{b,n}=v_B/c*f_{c,n}$ and this is a bistatic Doppler frequency of the target.

Next, by multiplying the received signal given by equation (11) by the local signal $\exp(j2\pi f_{c,n}t)$, like in the case of the reference system, the received signal is converted into a baseband signal.

$$\tilde{s}_{sur,n}(t) = \beta_n s_n(t - \tau_B)\exp(-j2\pi f_{c,n}\tau_B)\exp(j2\pi f_{b,n}t)\exp(j\tilde{\phi}_n) \qquad (12)$$

Next, by shifting the propagation delay time and the Doppler frequency of the direct wave of the frequency channel #n, a cross correlation process with the target scattered wave is performed in the following way.

$$CCF_n(\tau, f) = \frac{1}{T}\int_0^T \tilde{s}_{sur,n}(t)\tilde{s}_{ref,n}^*(t - \tau)\exp(-j2\pi ft)dt \qquad (13)$$

In this equation, T denotes an integral time.

Next, a cross correlation value of a target peak at the propagation delay time $\tau_T=\tau_B-\tau_D$ and the Doppler frequency $f_{b,n}$ can be expressed as follows.

$$CCF_n\left(\tau_T, f_{b,n}\right) = \frac{1}{T}\int_0^T \tilde{s}_{sur,n}(t)\tilde{s}_{ref,n}^{*}(t-\tau_T)\exp\left(-j2\pi f_{b,n}t\right)dt$$
$$= \alpha_n^{*}\beta_n P_n\exp\left(-j2\pi f_{c,n}\tau_T\right)$$

$$(14)$$

In this equation, Pn denotes the average power of the frequency band #n.

Then, by neglecting variations in amplitude and phase between frequency channels, a target RCS, and receiver frequency characteristics, the cross correlation value can be expressed as follows.

$$CCF_n\left(\tau_T, f_{b,n}\right) = A\exp\left(-j2\pi f_{c,n}\tau_T\right)$$

$$(15)$$

Because a cross correlation function $CCF_n(\tau_T, f_{b,n})$ is actually calculated from a discrete signal, when a delay time index is expressed by 1 (=0, ..., L-1) and a Doppler frequency index is expressed by k (=0, ..., K-1), the cross correlation function can be expressed by $\chi_n[l_T, k_{b,n}]$. In this case, when $\Delta t$ denotes a sampling period and $\Delta f$ denotes a Doppler frequency resolution, $\tau_T = l_T \Delta t$ and $f_{b,n} = k_{b,n}\Delta f$.

Further, in the case of a CS/BS satellite broadcast wave, the frequency interval $\Delta f$ is constant, the following equation $f_{c,n} = f_{c,0} + n\Delta f$ is provided. In that case, a coherent synthesis can be performed by performing an IFFT on the cross correlation value in a direction of the frequency channel in the following way.

$$\chi_{com}\left[l_T, k_{b,n}, k\right] = \frac{1}{N}\sum_{n=0}^{N-1}\chi_n\left[l_T, k_{b,n}\right]\exp\left(j2\pi\frac{kn}{N}\right)$$
$$= \frac{1}{N}\sum_{n=0}^{N-1}A\exp\left(-j2\pi\left(f_{c,0}+n\Delta f\right)\tau_T\right)\exp\left(j2\pi\frac{kn}{N}\right)$$
$$= \frac{1}{N}A\exp\left(-j2\pi f_{c,0}\tau_T\right)\sum_{n=0}^{N-1}\exp\left(-j2\pi n\Delta f\tau_T\right)\exp\left(j2\pi\frac{kn}{N}\right)$$

$$(16)$$

k which provides a peak of the absolute value of this equation (16) is expressed as follows.

$$k = N\Delta f\tau_T$$

$$(17)$$

It is further seen when the frequency characteristic of the target RCS is the one in which the amplitude is constant, but only the phase varies linearly, i.e., also when the frequency characteristic can be expressed by $\exp(j2\pi f_{c,n}\tau_{RCS})$ that the target is integrated through the above-mentioned IFFT in the direction of the frequency channel. However, in that case, it should be noted that the delay time index that provides a peak is shifted by $\tau_{RCS}$.

It needs to be premised that in order to implement the above-mentioned configuration, $\alpha_n \times \beta_n^{*} \times Pn$ does not vary between bands. However, Pn actually varies between bands and $\alpha_n \times \beta_n^{*}$ varies for each band due to a difference in the frequency characteristic between the survey system receiver and the reference system receiver. For this change of Pn, there is a method of compensating for the change by monitoring the direct wave from the satellite, and estimating the change, for example. Further, for the frequency characteristics between the receivers, there is a method of preparing a reference signal source separately, and compensating for the frequency characteristics by performing a signal input from a vicinity of the antenna or an end of the antenna. A problem is, however, that the scale of the device increases by the compensation and personnel costs at the time of compensation work are required. A further problem is that when performing the above-mentioned compensation during use of the passive radar device, it becomes impossible to receive the target reflected signal during the compensation.

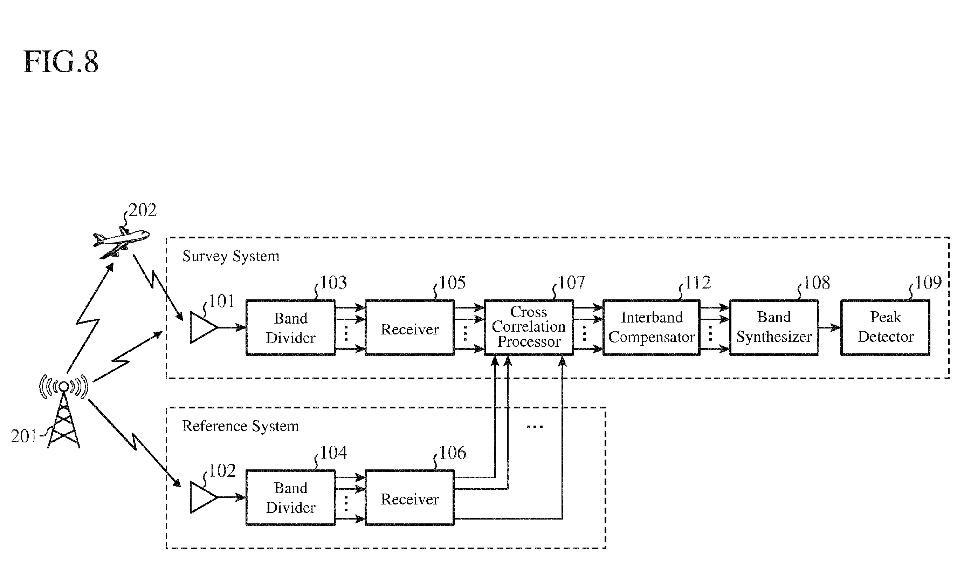

In Embodiment 4, an embodiment of compensating for the change of Pn and the frequency characteristics between the receivers in a real time by using a simple configuration with respect to the above-mentioned problem will be described. The configuration of the passive radar device in accordance with Embodiment 4 is shown in Fig. 8. The passive radar device in accordance with Embodiment 4 shown in Fig. 8 is the one in which an interband compensator 112 is added to the passive radar device in accordance with Embodiment 1 shown in Fig. 1. The other components are the same and are designated by the same reference numerals, and the explanation of the components will be omitted hereafter.

The interband compensator 112 compensates for the amplitude and phase variations of each frequency band for a cross correlation result of each frequency band which is provided by a cross correlation processor 107.

The band synthesizer 108 performs a band synthesis on the cross correlation result of each frequency band after the compensation by the interband compensator 112.

Next, the details of the interband compensator 112 will be explained.

Because the direct wave from a transmission source 201 generally has large electric power, the direct wave is mixed from a sidelobe or a backlobe of the receiving antenna 101 which is the survey system. In this stage, the amplitude and phase characteristics between bands are compensated for by using the direct wave mixed into the receiving antenna 101. In a case in which the receiving antenna 101 which is the survey system and the receiving antenna 102 which is the reference system are placed at substantially the same location (within the limit of the reciprocal of a signal band x the speed of light), and it can be assumed that the transmission source 201 is standing still when viewed from the receivers, in the cross correlation function between the received signal of the survey system and the received signal of the reference system, the direct wave mixed into the receiving antenna 101 from the transmission source 201 appears as a peak $s_{dir,n}$ at a point of the Doppler frequency index k=0 and the delay time index l=0.

$$s_{dir,n} = \chi_n[0,0] \qquad (1\ 8)$$

Even though the electric power of the direct wave mixed from the sidelobe or backlobe of the receiving antenna 101 is small, the direct wave appears as a peak if the integral time T of the cross correlation function is long. Generally, a comparison between the received power of the target reflection and the received power of direct wave leakage shows that the received power of the target reflection is equal to or smaller than one several tenths of that of direct wave leakage. Therefore, when executing the cross correlation function of the integral time which is of the order which makes the target reflected signal be detected, a peak of direct wave leakage occurs and a high SNR is provided in many cases.

In contrast, at the time of a synthesis between bands, because relative amplitude and phase characteristics between bands should just be compensated for, the interband compensator 112 calculates a correction coefficient by, for example, setting, as a reference, the band #1 in the following way.

$$c_{dir,n} = \frac{\chi_n[0,0]}{\chi_1[0,0]} \qquad (1\ 9)$$

Then, the interband compensator 112 can compensate for signal power variations between the bands of the transmission signal, and the frequency characteristics between the receivers by compensating for the cross correlation function in the following way by using the correction coefficient calculated as above.

$$\frac{\chi_n[l_T, k_{b,n}]}{c_{dir,n}} \qquad (2\ 0)$$

After that, the interband compensator 112 sends the cross correlation function on which the compensation between the bands is performed, as shown in equation (20), to the band synthesizer 108. As a result, the band synthesizer can perform a synthesis without a loss.

In the above-mentioned embodiment, the case in which the receiving antenna 101 and the receiving antenna 102 are placed at substantially the same location, and the transmission source 201 is standing still is assumed. In contrast with this, in a case in which a delay time difference between a path from the transmission source 201 to the receiving antenna 101 and a path from the transmission source 201 to the receiving antennas 102 is LdifΔt, the transmission source 201 is moving, and the Doppler frequency observed by the receivers with the movement is KdifΔf, the interband compensator 112 can calculate the correction coefficient in the following way.

$$c_{dir,n} = \frac{\chi_n[0,0]}{\chi_1[L_{dif}, K_{dif}]} \qquad (2\ 1)$$

Further, in the above-mentioned embodiment, the configuration in which direct wave leakage is used on the premise that the receiving antenna 101 is oriented toward a direction different from that of the receiving antenna 102 is shown. More specifically, the interband compensator 112 is configured in such a way as to calculate the correction coefficient for compensating for the amplitude and phase variations of each of the above-mentioned frequency bands by using the amplitude ratio and the phase difference of the direct wave leakage in the cross correlation result of each frequency band which is provided by the cross correlation processor 107, and compensate for the cross correlation result by using the above-mentioned correction coefficient.

In contrast, when the direct wave leakage is extremely low and does not appear as a peak of the cross correlation function, a configuration in which the correction coefficient is calculated by temporarily orienting the receiving antenna 101 toward the direction of the transmission source 201, and the receiving antenna 101 is oriented toward the direction of the target again is also considered. More specifically, the interband compensator 112 can be configured in such a way as to set, as the correction coefficient, the amplitude ratio and the phase difference between the received signal of the reflected wave of each frequency band and the received signal of the direct wave of each frequency band which are acquired by orienting the receiving antenna 101 toward the direction of the direct wave, and compensate for the cross correlation result of each of the above-mentioned frequency bands by using the above-mentioned correction coefficient.

Further, in the above-mentioned embodiment, the compensation between the frequency bands is performed by using a peak corresponding to the direct wave in the cross correlation function between the received signal of the survey system and the received signal of the reference system. In contrast with this, the interband compensator can be configured in such a way as to determine the correction coefficient by simply comparing the amplitudes and the phases between the bands of the received signal of the survey system and those of the received signal of the reference system.

As mentioned above, because the passive radar device in accordance with this Embodiment 4 is configured in such a way as to calculate the correction coefficient between bands during a flow of a series of conventional target detection processes without adding a new device as an interband compensator, the passive radar device can compensate for the amplitude and phase variations between the bands in a real time while preventing increase of the device scale, and can improve a target SNR in the band synthesizer 108.

Embodiment 5.

In Embodiment 5, a case in which a high resolution cross correlation function is acquired by sorting data in a direction of the delay time in the band synthesizer 108 in accordance with Embodiment 1 shown in Fig. 1 is shown. The passive radar device in accordance with Embodiment 5 has the same configuration as the passive radar device in accordance with Embodiment 1 shown in Fig. 1, and only a different portion will be explained while the same components are designated by the same reference numerals.

For the cross correlation result of each frequency band which is provided by the cross correlation processor 107, the band synthesizer 108 in accordance with Embodiment 5 compensates for a phase variation in each frequency band depending on the delay time index of the above-mentioned cross correlation result, and sorts the cross correlation results after interband synthesis, on which an inverse fast Fourier transform for each frequency band mentioned above is performed, in the direction of the delay time.

In this case, the longest delay time $\tau_{max}$ that can be observed in equation (17) after band synthesis is k=N, and can be expressed as follows.

$$\tau_{max} = \frac{1}{\Delta f} \qquad (2\,2)$$

Further, the delay time resolution $\Delta\tau$ is expressed as follows.

$$\Delta\tau = \frac{1}{N\Delta f} \qquad (2\,3)$$

Therefore, when the target delay time $\tau$ exceeds the above-mentioned range shown by (22), ambiguity of the delay time occurs and a precise delay time cannot be estimated.

Therefore, Embodiment 5 is aimed at performing a band synthesis after compensating for a phase corresponding to the delay by using the delay time index of the cross correlation processed result, thereby eliminating the ambiguity of the delay time and acquiring a precise delay time.

In accordance with Embodiment 5, phase compensation is performed first by using the delay time index $I_T$ after the cross correlation process in the following way.

$$\widetilde{\chi}_n\big[l_T,k_{b,n}\big] \equiv \chi_n\big[l_T,k_{b,n}\big]\exp\big(j2\pi f_{c,n}l\Delta t\big) = A\exp\big(-j2\pi f_{c,n}(\tau_T - l_T\Delta t)\big) \qquad (24)$$

Next, a synthesis between bands is performed by performing an IFFT on the cross correlation function after the above-mentioned phase compensation in a band direction in the following way, like in the case of Embodiment 1.

$$\chi_{com}\big[l_T,k_{b,n},m\big] = \frac{1}{\sqrt{N}}\sum_{n=0}^{N-1}\widetilde{\chi}_n\big[l_T,k_{b,n}\big]\exp\left(j2\pi\frac{nm}{N}\right) \qquad (25)$$

In this equation, m (=0, 1, ..., N-1) denotes a high resolution delay time index.

It is seen that the range of delay times which should be estimated by the band synthesizer 108 is limited to $\Delta t$ through the calculation done in the above-mentioned way. This $\Delta t$ is a sampling period and is usually set to be the reciprocal of the signal band width B. More specifically, $\Delta t=1/B$. Therefore, the delay time $\tau_T$ can be determined in the following way.

$$\tau_T = l_T\Delta t + m_T\frac{1}{N\Delta f} \qquad (26)$$

Further, by sorting equation (26) in the direction of the delay time as follows, the cross correlation function in which the resolution of delay time is improved can be acquired.

$$\chi_{com}\big[\widetilde{l_T},k_{b,n}\big] \qquad (27)$$

In this equation, the following equation holds.

$$\widetilde{l_T} = m_T + (l_T - 1)N \qquad (28)$$

As mentioned above, in the passive radar device in accordance with this Embodiment 5, because the band synthesizer 108 is configured in such a way as to perform the synthesizing process between the bands after compensating for the phase depending on the delay time of the cross correlation function, the passive radar device can eliminate the ambiguity of the delay time after the interband synthesis, and acquire a high resolution cross correlation function.

Embodiment 6.

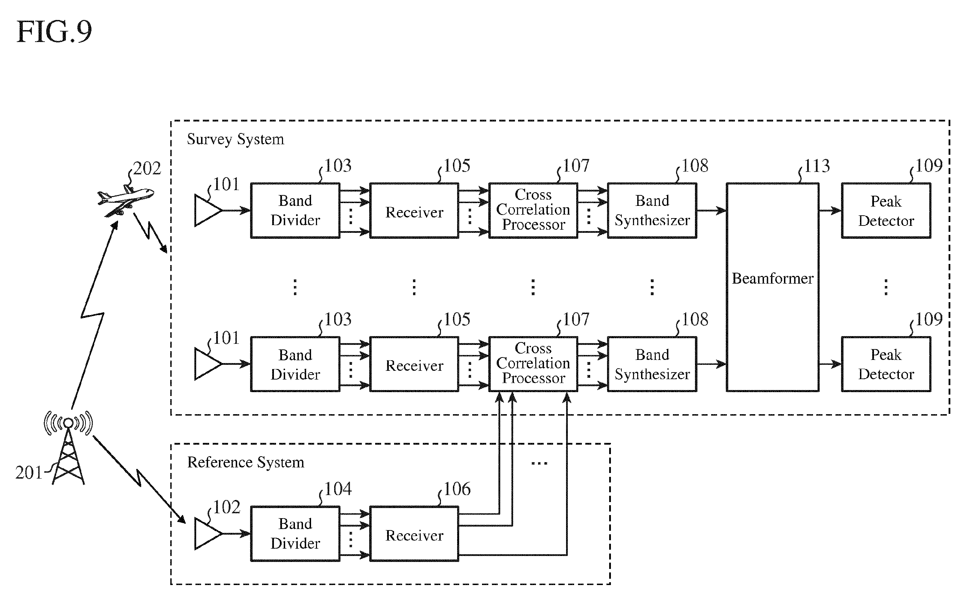

Although the case in which the number of survey systems is one is shown in Embodiments 1 to 5, a configuration in which a plurality of survey systems are disposed is shown in Embodiment 6. Fig. 9 is a diagram showing the configuration of a passive radar device in accordance with Embodiment 6 of the present invention. The passive radar device in accordance with Embodiment 6 shown in Fig. 9 is the one in which a plurality of survey systems each including the receiving antenna 101, the band divider 103, the receiver 105, the cross correlation processor 107, the band synthesizer 108, and the peak detector 109 of the passive radar device in accordance with Embodiment 1 shown in Fig. 1 are disposed, and a beamformer 113 is added. The other components are the same and are designated by the same reference numerals, and the explanation of the components will be omitted hereafter.

The beamformer 113 performs beam forming by synthesizing band synthesis results, which are provided by the plurality of band synthesizers 108, between the plurality of receiving antennas 101.

The plurality of target detectors 109 detect a target on the basis of a beam forming result provided by the beamformer 113.

In this case, the beamformer 113 synthesizes cross correlation functions after the band synthesis between the receiving antennas 101 of the survey systems in the following way. More specifically, the beamformer 113 performs beam forming on the band synthesis results provided by the band synthesizers 108 in such a way as to compensate for a phase difference depending on the carrier frequency, the beam orientation, and the positional relationship between the receiving antennas 101. In a case in which the receiving antennas 101 constructs a uniform array antenna (an antenna interval of d, and the number p of antennas), the beam forming process with the cross correlation function

$\chi_{com,p}[l_T, k_{b,n}, m]$ can be expressed as follows.

$$\chi_{com,\theta_q}\left[l_T, k_{b,n}, m\right] = \sum_{p=1}^{P} \chi_{com,p}\left[l_T, k_{b,n}, m\right] \exp\left( j2\pi \frac{d(p-1)\sin\theta_q}{\lambda} \right) \qquad (29)$$

In this equation, $\theta q$ denotes the beam orientation.

By performing the beam forming in the above-mentioned way, an SNR improvement gain corresponding to the number of antennas is expected.

Further, a configuration can be provided in which after calculating the absolute value (amplitude value) of $\chi[l_T, k_{b,n}, m]$ or a power value, and the cross correlation functions corresponding to the number of antennas are synthesized (added or averaged).

Further, although the case of a uniform array antenna is described above, an extension also in the case of a non-uniform array or a two-dimensional array can be implemented.

Further, the beamformer 113 can be configured in such a way as to perform the beam forming immediately after the process performed by the cross correlation processor 107.

As mentioned above, in accordance with this Embodiment 6, because the plurality of survey systems are disposed, and the beamformer 113 that performs beam forming by synthesizing the processed results, which are provided by the cross correlation processor 107 or the band synthesizer 108, between the plurality of receiving antennas 101 is disposed, an SNR improvement gain corresponding to the number of antennas can be expected.

Embodiment 7.

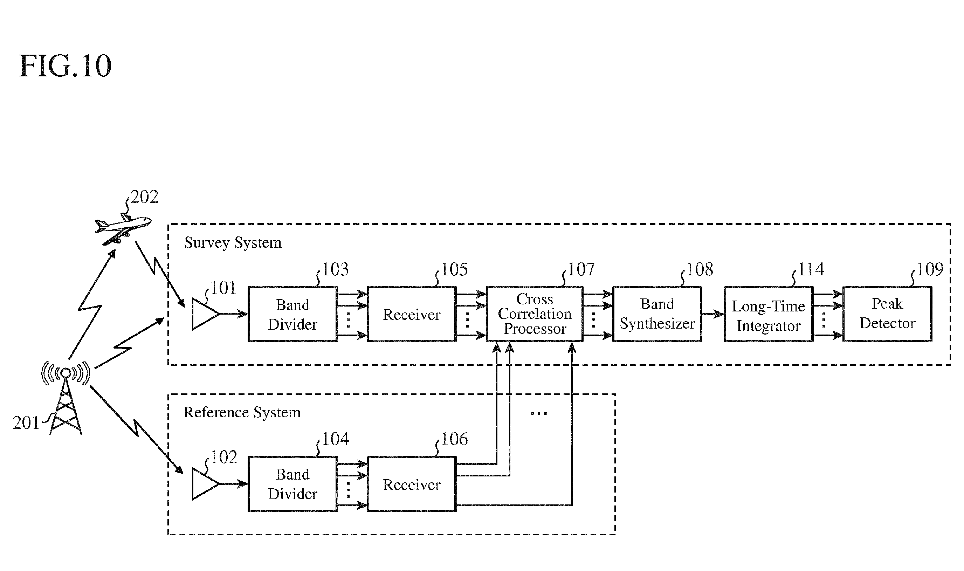

In Embodiment 7, a configuration will be shown in which long-time integration is performed efficiently by integrating a cross correlation function after band synthesis in a temporal direction. Fig. 10 is a diagram showing the configuration of a passive radar device in accordance with Embodiment 7 of the present invention. The passive radar device in accordance with Embodiment 7 shown in Fig. 10 is the one in which a long-time integrator 114 is added to the passive radar device in accordance with Embodiment 1 shown in Fig. 1. The other components are the same and are designated by the same reference numerals, and the explanation of the components will be omitted hereafter.

The long-time integrator 114 integrates the band synthesis result provided by the band synthesizer 108 for a long time.

The target detector 109 detects a target on the basis of an integrated result provided by the long-time integrator 114.

As the integration for a long time by the long-time integrator 114, for example, there is a method disclosed by nonpatent reference 1. In this long-time integration disclosed by nonpatent reference 1, a radar received signal of each pulse hit is divided into some CPIs (Coherent Pulse Intervals) first. Then, in each CPI provided through the division, a range Doppler map which is integrated through an FFT between pulse hits is generated. Then, when integrating the range Doppler map between CPIs, a plurality of hypotheses according to a movement of the target are set up, and the integration is performed in the temporal direction. As a result, an integration loss due to a range Doppler frequency shift of the target can be reduced.

In this case, the above-mentioned range Doppler map of each pulse hit can be replaced by a cross correlation function of each block in Embodiment 2. More specifically, some blocks shown in Fig. 5 are combined as one CPI, and data about a plurality of CPIs are generated. A case in which in each CPI, integration between blocks is performed through an FFT, as shown in Embodiment 2, cross correlation functions are calculated, and a plurality of hypotheses are set up when integrating the cross correlation functions between CPIs will be examined.

In this case, when the number of delay time (range) indexes after cross correlation in each CPI is expressed by $L_t$, a Doppler frequency index number is expressed by $K_D$, the number of hypotheses according to a movement of the target is expressed by $N_{HY}$, and the number of CPIs is expressed by $N_{CPI}$, in a configuration in which the band synthesis process is performed after the long-time integration, the calculation of an N-point IFFT $L_t K_D N_{HY} N_{CPI}$ times is needed at the time of the band synthesis process. On the other hand, when the long-time integration after the band synthesis process is performed, there is provided an advantage of being able to perform the band synthesis process with an amount of computations corresponding to the N-point $L_t K_D N_{CPI}$-time IFFT, so that the number of IFFT operation times decreases by the number of hypotheses $N_{HY}$.

As mentioned above, because the passive radar device in accordance with this Embodiment 7 includes the long-time integrator 114 that performs long-time integration between CPIs of the cross correlation functions after the band synthesis process, the passive radar device can reduce the number of IFFT operation times by the number of hypotheses $N_{HY}$ as compared with the configuration in which the band synthesis process is performed after the long-time integration.

While the invention has been described in its preferred embodiments, it is to be understood that an arbitrary combination of two or more of the above-mentioned embodiments can be made, various changes can be made in an arbitrary component in accordance with any one of the above-mentioned embodiments, and an arbitrary component in accordance with any one of the above-mentioned embodiments can be omitted within the scope of the invention.

INDUSTRIAL APPLICABILITY

The passive radar device in accordance with the present invention is suitable for use as a passive radar device that can prevent an integration loss which is caused by a difference in the Doppler frequency between a plurality of frequency bands, and implements detection and tracking of a target, such as an airplane or a ship, by using, as a radiation source, an existing radio source without radiating a radio wave for itself, and that provides an improvement in its detection tracking performance by performing a coherent synthesis on the plurality of frequency bands.

EXPLANATIONS OF REFERENCE NUMERALS

101 receiving antenna (survey system receiving antenna), 102 receiving antenna (reference system receiving antenna), 103 band divider (survey system band divider), 104 band divider (reference system band divider), 105 receiver (survey system receiver), 106 receiver (reference system receiver), 107 cross correlation processor, 108 band synthesizer, 109 peak detector (target detector), 110 wide band receiver (survey system wide band receiver), 111 wide band receiver (reference system wide band receiver), 112 interband compensator, 113 beamformer, 114 long-time integrator, 201 transmission source (radio source), 202 target, 1071 Doppler frequency shifter, 1072, 1072b, 1073, 1073b FFT unit, 1074 complex conjugate multiplier, 1075 IFFT unit, 1076 block divider (survey system block divider), 1077 block divider (reference system block divider), and 1078 interblock FFT unit.

**Claims**

1. A passive radar device comprising:

   a survey system receiving antenna that receives a reflected wave transmitted from a radio source and reflected by a target;
   a reference system receiving antenna that receives a direct wave transmitted from said radio source;
   a survey system band divider that divides a received signal of the reflected wave received by said survey system receiving antenna on a frequency band by frequency band basis;
   a reference system band divider that divides a received signal of the direct wave received by said reference system receiving antenna on a frequency band by frequency band basis;
   a survey system receiver that receives a received signal of the reflected wave of each frequency band provided through the division by said survey system band divider, and performs A/D conversion on the received signal;
   a reference system receiver that receives a received signal of the direct wave of each frequency band provided through the division by said reference system band divider, and performs A/D conversion on the received signal;
   a cross correlation processor that performs a cross correlation on a frequency band by frequency band basis between the received signal of the reflected wave on which the A/D conversion is performed by said survey system receiver, and the received signal of the direct wave on which the A/D conversion is performed by said reference system receiver;
   a band synthesizer that performs a band synthesis on a cross correlation result of each frequency band which is provided by said cross correlation processor; and
   a target detector that detects said target on a basis of a band synthesis result provided by said band synthesizer.

2. The passive radar device according to claim 1, wherein said survey system band divider and said reference system band divider divide said received signals on a frequency band by frequency band basis in analog stages.

3. The passive radar device according to claim 1, wherein said survey system band divider and said reference system band divider have local signal transmission sources, and mix signals in which frequencies from said local signal transmission sources are varied in a time series, and said received signals, to divide said received signals on a frequency band by frequency band basis.

4. The passive radar device according to claim 1, wherein said cross correlation processor includes:

a Doppler frequency shifter that performs a frequency shift on the received signal of the direct wave of each frequency band from said reference system receiver by a Doppler frequency calculated from both an expected bistatic Doppler speed of the target, and a carrier frequency of said each frequency band;

an FFT unit that performs a fast Fourier transform on the received signal of the reflected wave of each frequency band from said survey system receiver, and the received signal of the direct wave of each frequency band on which the frequency shift is performed by said Doppler frequency shifter;

a complex conjugate multiplier that takes complex conjugate of the received signal of the direct wave of each frequency band on which the fast Fourier transform is performed by said FFT unit, and that multiplies the complex conjugate by the received signal of the reflected wave of each frequency band on which the fast Fourier transform is performed by said FFT unit; and

an IFFT unit that performs an inverse fast Fourier transform on a complex conjugate multiplication result provided by said complex conjugate multiplier.

5. The passive radar device according to claim 1, wherein said cross correlation processor includes:

a block divider that divides both the received signal of the reflected wave of each frequency band from said survey system receiver and the received signal of the direct wave of each frequency band from said reference system receiver on a block by block basis;

an FFT unit that performs a fast Fourier transform on both a received signal of the reflected wave of each frequency band and of each block provided through the division by said block divider and a received signal of the direct wave of each frequency band and of each block provided through the division by said block divider;

a complex conjugate multiplier that takes complex conjugate of the received signal of the direct wave of each frequency band and of each block on which the fast Fourier transform is performed by said FFT unit, and that multiplies the complex conjugate by the received signal of the reflected wave of each frequency band and of each block on which the fast Fourier transform is performed by said FFT unit;

an IFFT unit that performs an inverse fast Fourier transform on a complex conjugate multiplication result provided by said complex conjugate multiplier; and

an interblock FFT unit that performs a fast Fourier transform on an inverse fast Fourier transform result provided by said IFFT unit in a block direction.

6. The passive radar device according to claim 5, wherein after dividing said received signal into blocks each having a time interval of Tb, said survey system block divider adds a received signal of a next block to a received signal of each block provided through said division to generate a block having a time interval of 2Tb, and, after dividing said received signal into blocks each having said time interval of Tb, said reference system block divider adds a zero signal having said time interval of Tb to a received signal of each block provided through said division to generate a block having a time interval of 2Tb.

7. The passive radar device according to claim 5, wherein said survey system block divider divides said received signal on an interval Tb by Tb basis to generate blocks each having a time interval of Tb, and said reference system block divider divides said received signal on an interval Tb by Tb basis to generate blocks each having a time interval of Tb.

8. The passive radar device according to claim 1, wherein said band synthesizer performs an inverse Fourier transform, in a band direction, on the cross correlation result of each frequency band which is provided by said cross correlation processor, to perform the band synthesis.

9. The passive radar device according to claim 1, wherein when intervals between said frequency bands are evenly spaced, said band synthesizer performs an inverse Fourier transform, in a band direction, on the cross correlation result of each frequency band which is provided by said cross correlation processor, to perform the band synthesis.

10. The passive radar device according to claim 1, wherein said band synthesizer calculates a Doppler speed from a Doppler frequency of the cross correlation result of each frequency band which is provided by said cross correlation processor, and performs an inverse fast Fourier transform, in a band direction, on cross correlation results in which said Doppler speeds match or are close to each other, to perform the band synthesis.

11. A passive radar device comprising:

a survey system receiving antenna that receives a reflected wave transmitted from a radio source and reflected by a target;

a reference system receiving antenna that receives a direct wave transmitted from said radio source;

a survey system wide band receiver that receives a received signal of the reflected wave, which is received by said survey system receiving antenna, in a wide band, performs A/D conversion on the received signal, and divides the received signal on a frequency band by frequency band basis;

a reference system wide band receiver that receives a received signal of the direct wave, which is received by said reference system receiving antenna, in a wide band, performs A/D conversion on the received signal, and divides the received signal on a frequency band by frequency band basis;

a cross correlation processor that performs a cross correlation on a frequency band by frequency band basis between a received signal of the reflected wave provided through the division by said survey system wide band receiver, and a received signal of the direct wave provided through the division by said reference system wide band receiver;

a band synthesizer that performs a band synthesis on a cross correlation result of each frequency band which is provided by said cross correlation processor; and

a target detector that detects said target on a basis of a band synthesis result provided by said band synthesizer.

12. The passive radar device according to claim 1, wherein said band synthesizer performs an inverse Fourier transform, in a band direction, on cross correlation results in each of which a ratio between Doppler frequencies of the cross correlation results of frequency bands which are provided by said cross correlation processor matches or is close to a ratio between carrier frequencies of said frequency bands, to perform the band synthesis.

13. The passive radar device according to claim 1, wherein for the cross correlation result of each frequency band which is provided by said cross correlation processor, said band synthesizer compensates for a phase variation for each frequency band depending on a delay time index of said cross correlation result, and sorts, in a delay time direction, cross correlation results after interband synthesis on which an inverse fast Fourier transform for said each frequency band is performed.

14. A passive radar device comprising:

a survey system receiving antenna that receives a reflected wave transmitted from a radio source and reflected by a target;

a reference system receiving antenna that receives a direct wave transmitted from said radio source;

a survey system band divider that divides a received signal of the reflected wave received by said survey system receiving antenna on a frequency band by frequency band basis;

a reference system band divider that divides a received signal of the direct wave received by said reference system receiving antenna on a frequency band by frequency band basis;

a survey system receiver that receives a received signal of the reflected wave of each frequency band provided through the division by said survey system band divider, and performs A/D conversion on the received signal;

a reference system receiver that receives the received signal of the direct wave of each frequency band provided through the division by said reference system band divider, and performs A/D conversion on the received signal;

a cross correlation processor that performs a cross correlation on a frequency band by frequency band basis between the received signal of the reflected wave on which the A/D conversion is performed by said survey system receiver, and the received signal of the direct wave on which the A/D conversion is performed by said reference system receiver;

an interband compensator that, for a cross correlation result provided of each frequency band which is provided by said cross correlation processor, compensates for amplitude and phase variations for said each frequency band;

a band synthesizer that performs a band synthesis on the cross correlation result of each frequency band which is compensated for by said interband compensator; and

a target detector that detects said target on a basis of a band synthesis result provided by said band synthesizer.

15. The passive radar device according to claim 14, wherein by using an amplitude ratio and a phase difference between leakage components of the direct wave in the cross correlation results of frequency bands provided by said cross correlation processor, said interband compensator calculates a correction coefficient for compensating for the amplitude and phase variations for each of said frequency bands, and compensates for the cross correlation result by using said correction coefficient.

16. The passive radar device according to claim 14, wherein said interband compensator sets, as a correction coefficient, an amplitude ratio and a phase difference between the received signal of the reflected wave of each frequency band and the received signal of the direct wave of each frequency band, which are acquired by orienting said survey system receiving antenna toward a direction of the direct wave, and compensates for the cross correlation result for said each frequency band by using said correction coefficient.

17. A passive radar device comprising:

a plurality of survey system receiving antennas each that receives a reflected wave transmitted from a radio source and reflected by a target;

a reference system receiving antenna that receives a direct wave transmitted from said radio source;

a survey system band divider that divides received signals of the reflected waves received by said plurality of survey system receiving antennas on a frequency band by frequency band basis;

a reference system band divider that divides a received signal of the direct wave received by said reference system receiving antenna on a frequency band by frequency band basis;

a survey system receiver that receives received signals of the reflected wave of each frequency band provided through the division by said survey system band divider, and performs A/D conversion on the received signals;

a reference system receiver that receives a received signal of the direct wave of each frequency band provided through the division by said reference system band divider, and performs A/D conversion on the received signal;

a cross correlation processor that performs a cross correlation on a frequency band by frequency band basis between the received signals of the reflected wave on which the A/D conversion is performed by said survey system receiver, and the received signal of the direct wave on which the A/D conversion is performed by said reference system receiver;

a band synthesizer that performs a band synthesis on cross correlation results of each frequency band which is provided by said cross correlation processor;

a beamformer that performs beam forming by synthesizing band synthesis results provided by said band synthesizer between said plurality of survey system receiving antennas; and

a target detector that detects said target on a basis of a beam forming result provided by said beamformer.

18. A passive radar device comprising:

a plurality of survey system receiving antennas each that receives a reflected wave transmitted from a radio source and reflected by a target;

a reference system receiving antenna that receives a direct wave transmitted from said radio source;

a survey system band divider that divides received signals of the reflected waves received by said plurality of survey system receiving antennas on a frequency band by frequency band basis;

a reference system band divider that divides a received signal of the direct wave received by said reference system receiving antenna on a frequency band by frequency band basis;

a survey system receiver that receives received signals of the reflected wave of each frequency band provided through the division by said survey system band divider, and performs A/D conversion on the received signals;

a reference system receiver that receives a received signal of the direct wave of each frequency band provided through the division by said reference system band divider, and performs A/D conversion on the received signal;

a cross correlation processor that performs a cross correlation on a frequency band by frequency band basis between the received signals of the reflected wave on which the A/D conversion is performed by said survey system receiver, and the received signal of the direct wave on which the A/D conversion is performed by said reference system receiver;

a beamformer that performs beam forming by synthesizing cross correlation results of each frequency band which are provided by said cross correlation processor between said plurality of survey system receiving antennas;

a band synthesizer that performs a band synthesis on a beam forming result provided by said beamformer; and

a target detector that detects said target on a basis of a band synthesis result provided by said beamformer.

19. The passive radar device according to claim 17, wherein for a band synthesis result provided by said band synthesizer, said beamformer performs the beam forming in such a way as to compensate for a phase difference depending on a carrier frequency, a beam orientation, a positional relationship between said survey system receiving antennas.

20. The passive radar device according to claim 18, wherein for the cross correlation results of each frequency band which are provided by said cross correlation processor, said beamformer performs the beam forming in such a way as to compensate for a phase difference depending on a carrier frequency, a beam orientation, a positional relationship between said survey system receiving antennas.

21. The passive radar device according to claim 17, wherein for a band synthesis result provided by said band synthesizer, said beamformer calculates an amplitude value or a power value, and, after that, performs addition or average of the value a number of times corresponding to a number of said survey system receiving antennas.

22. The passive radar device according to claim 18, wherein for the cross correlation results of each frequency band which are provided by said cross correlation processor, said beamformer calculates an amplitude value or a power value, and, after that, performs addition or average of the value a number of times corresponding to a number of said survey system receiving antennas.

23. A passive radar device comprising:

a survey system receiving antenna that receives a reflected wave transmitted from a radio source and reflected by a target;
a reference system receiving antenna that receives a direct wave transmitted from said radio source;
a survey system band divider that divides a received signal of the reflected wave received by said survey system receiving antenna on a frequency band by frequency band basis;
a reference system band divider that divides a received signal of the direct wave received by said reference system receiving antenna on a frequency band by frequency band basis;
a survey system receiver that receives a received signal of the reflected wave of each frequency band provided through the division by said survey system band divider, and performs A/D conversion on the received signal;
a reference system receiver that receives a received signal of the direct wave of each frequency band provided through the division by said reference system band divider, and performs A/D conversion on the received signal;
a cross correlation processor that performs a cross correlation on a frequency band by frequency band basis between the received signal of the reflected wave on which the A/D conversion is performed by said survey system receiver, and the received signal of the direct wave on which the A/D conversion is performed by said reference system receiver;
a band synthesizer that performs a band synthesis on a cross correlation result of each frequency band which is provided by said cross correlation processor;
a long-time integrator that integrates a band synthesis result provided by said band synthesizer for a long time; and
a target detector that detects said target on a basis of an integration result provided by said long-time integrator.

24. The passive radar device according to claim 23, wherein said long-time integrator integrates the cross correlation result provided by said cross correlation processor in a temporal direction on a basis of a plurality of hypotheses according to a movement of said target.

# FIG.1

FIG.2

EP 2 960 675 A1

FIG.3

Cross Correlation Processor

107

Band#1 Survey System Received Signal — FFT Unit — 1072

Band#1 Reference System Received Signal — Doppler Frequency Shifter#L / Doppler Frequency Shifter#1 — 1071 — FFT Unit / FFT Unit — 1073 — Complex Conjugate Multiplication — 1074 — IFFT Unit / IFFT Unit — 1075 — CCF(1, L, m) / CCF(1, 2, m) / CCF(1, 1, m)

Band#2 Survey System Received Signal — FFT Unit — 1072

Band#2 Reference System Received Signal — Doppler Frequency Shifter#L / Doppler Frequency Shifter#1 — 1071 — FFT Unit / FFT Unit — 1073 — Complex Conjugate Multiplication — 1074 — IFFT Unit / IFFT Unit — 1075 — CCF(2, L, m) / CCF(2, 2, m) / CCF(2, 1, m)

Band#N Survey System Received Signal — FFT Unit — 1072

Band#N Reference System Received Signal — Doppler Frequency Shifter#L / Doppler Frequency Shifter#1 — 1071 — FFT Unit / FFT Unit — 1073 — Complex Conjugate Multiplication — 1074 — IFFT Unit / IFFT Unit — 1075 — CCF(N, L, m) / CCF(N, 2, m) / CCF(N, 1, m)

EP 2 960 675 A1

# FIG.4

START

Receive Reflected Wave Transmitted from
Transmission Source and Reflected by Target ~ST1

Receive Direct Wave from Transmission Source ~ST2

Divide Received Signal of Reflected Wave on
Frequency Band by Frequency Band Basis ~ST3

Divide Received Signal of Direct Wave
on Frequency Band by Frequency Band Basis ~ST4

A/D Convert Received Signal of Reflected Wave
Provided on Frequency Band by Frequency Band Basis ~ST5

A/D Convert on Received Signal of Direct Wave
Provided on Frequency Band by Frequency Band Basis ~ST6

Perform Cross Correlation between Received Signals
of Reflected Wave and Direct Wave on
Frequency Band by Frequency Band Basis ~ST7

Perform Band Synthesis on Cross Correlation Results
Provided on Frequency Band by Frequency Band Basis ~ST8

Detect Target from Band Synthesis Result ~ST9

END

FIG.5

# FIG.6

(a)

Reference System Received Signal T

Survey
System
Received
Signal

Tb

. . . . . . .

Block
#1

Block
#2

. . . . . .

Block
#P

(b)

Reference System Received Signal T

Reference
System
Received
Signal

Tb

. . . . . . .

Block
#1

0

Block
#2

0

. . . . . .

Block
#P

0

FIG.7

Survey System

Wide Band Receiver 110

Cross Correlation Processor 107

Band Synthesizer 108

Peak Detector 109

101

202

Reference System

Wide Band Receiver 111

102

201

FIG.8

EP 2 960 675 A1

# FIG.9

Survey System

202
101
103 Band Divider
105 Receiver
107 Cross Correlation Processor
108 Band Synthesizer
113 Beamformer
109 Peak Detector

101
103 Band Divider
105 Receiver
107 Cross Correlation Processor
108 Band Synthesizer
109 Peak Detector

201

Reference System

102
104 Band Divider
106 Receiver

# FIG.10

Survey System

101 ▷

| 103 Band Divider | 105 Receiver | 107 Cross Correlation Processor | 108 Band Synthesizer | 114 Long-Time Integrator | 109 Peak Detector |

Reference System

102 ▷

| 104 Band Divider | 106 Receiver |

202

201

EP 2 960 675 A1

## INTERNATIONAL SEARCH REPORT

| International application No. |
| --- |
| PCT/JP2013/072423 |

**A. CLASSIFICATION OF SUBJECT MATTER**
*G01S13/46*(2006.01)i

According to International Patent Classification (IPC) or to both national classification and IPC

**B. FIELDS SEARCHED**

Minimum documentation searched (classification system followed by classification symbols)
G01S13/46

Documentation searched other than minimum documentation to the extent that such documents are included in the fields searched
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2011-179882 A  (Mitsubishi Electric Corp.), 15 September 2011 (15.09.2011), | 1-5,7-14, 17-24 |
| A | paragraphs [0001], [0012] to [0015], [0017] to [0018], [0027] to [0055]; fig. 1 to 4 (Family: none) | 6,15-16 |
| Y | JP 2007-212413 A  (Toyota Motor Corp.), 23 August 2007 (23.08.2007), | 1-5,7-14, 17-24 |
| A | paragraphs [0003] to [0005], [0014], [0017] to [0022], [0030] to [0038], [0070]; fig. 1 to 3 (Family: none) | 6,15-16 |
| Y | WO 2012/111141 A1  (Mitsubishi Electric Corp.), 23 August 2012 (23.08.2012), paragraph [0006] (Family: none) | 4 |

[X] Further documents are listed in the continuation of Box C.     [ ] See patent family annex.

| * | Special categories of cited documents: | "T" | later document published after the international filing date or priority date and not in conflict with the application but cited to understand the principle or theory underlying the invention |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 06 September, 2013 (06.09.13) | 17 September, 2013 (17.09.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/072423

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 8-179037 A (Mitsubishi Electric Corp.), 12 July 1996 (12.07.1996), paragraphs [0016] to [0018]; fig. 23 to 24 (Family: none) | 4 |
| Y | JP 2002-107447 A (Mitsubishi Electric Corp.), 10 April 2002 (10.04.2002), paragraph [0011]; fig. 1 (Family: none) | 8-10,12-13 |
| Y | JP 2012-2797 A (Japan Radio Co., Ltd.), 05 January 2012 (05.01.2012), paragraphs [0032], [0036], [0099]; fig. 1 (Family: none) | 11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005517190 PCT

**Non-patent literature cited in the description**

- **K.S. KULPA ; J. MISIUREWICZ.** Stretch Processing for Long Integration Time Passive CovertRadar. *CIE'06. International Conf.,* October 2006